# EUROPEAN PATENT APPLICATION

(11) **EP 4 647 347 A1**
(43) Date of publication of application: **12.11.2025**
(21) Application number: 25174019.7
(22) Date of filing: 02.05.2025
(51) Int. Cl.: B64U 10/20, B64U 30/10, B64U 30/297, B64U 40/10

(54) **AIRSPEED DRIVEN TILT ANGLE FOR ELECTRIC TILTROTOR AIRCRAFT**

(30) Priority: 10.05.2024 US 202418660344
(71) Applicant: Lockheed Martin Corporation, Bethesda, MD 20817 (US)
(72) Inventor: GAMBLE, Dustin Eli, San Luis Obispo, CA 93401 (US); STOREY, Terrance James Elliott, San Luis Obispo, CA 93401-6823 (US)
(74) Representative: Barker Brettell LLP

(57) **Abstract**

Systems and methods include a controller (112) configured to actuate a rotor assembly (110, 110a,b,c) of an aircraft vehicle (100). The controller (112) is configured to transmit an instruction to rotate the rotor assembly (110, 110a,b,c) to an initial angle with respect to a vertical axis. The controller (112) is further configured to receive one or more measurements associated with an airspeed of the aircraft vehicle (100). The controller (112) is further configured to determine if the airspeed of the aircraft vehicle (100) is greater than or equal to an airspeed threshold value. In response to a determination that the airspeed of the aircraft vehicle (100) is not greater than or equal to the airspeed threshold value, the controller (112) is further configured to: determine a subsequent angle for rotating a first rotor assembly (110a) and to transmit a subsequent instruction to rotate the first rotor assembly (110a) to the subsequent angle.

## Description

### TECHNICAL FIELD

This disclosure generally relates to unmanned aircraft, and more specifically to determining dynamic tilt angles for unmanned aircraft.

### BACKGROUND

Rotor assemblies can be used to provide lift and thrust for unmanned aircraft. The rotor blades of a rotor assembly can be positioned initially to provide the lift and then can be moved to provide the thrust. This transition provides instability to the unmanned aircraft as the force vector transitions from a vertical direction to a horizontal direction. Transitioning the force vector can result in altitude loss and/or dropping the position of the nose of the aircraft. There is a need for improving the transition from vertical flight to fixed wing flight (i.e., horizontal flight) with aircraft having rotor lift systems, such as rotor assemblies.

### SUMMARY

According to one embodiment, an aircraft vehicle may include a body and at least one wing coupled to the body. The aircraft vehicle may further include a first aircraft fairing extending from a first side of the body and a first rotor assembly disposed at an end of the first aircraft fairing. The aircraft vehicle may further include a controller configured to actuate the first rotor assembly, comprising a memory and a processor. The memory may be configured to store an airspeed threshold value. The processor may be configured to transmit an instruction to rotate the first rotor assembly to an initial angle with respect to a vertical axis. The processor may be further configured to receive one or more measurements associated with an airspeed of the aircraft vehicle. The processor may be further configured to determine if the airspeed of the aircraft vehicle is greater than or equal to the airspeed threshold value. In response to a determination that the airspeed of the aircraft vehicle is not greater than or equal to the airspeed threshold value, the processor may be further configured to determine a subsequent angle for rotating the first rotor assembly and to transmit a subsequent instruction to rotate the first rotor assembly to the subsequent angle.

According to another embodiment, a method for actuating a rotor assembly may include transmitting an instruction to rotate the rotor assembly to an initial angle with respect to a vertical axis, wherein the rotor assembly is disposed at an end of an aircraft fairing extending from a body of an aircraft vehicle. The method may further include receiving one or more measurements associated with an airspeed of the aircraft vehicle. The method may further include determining if the airspeed of the aircraft vehicle is greater than or equal to the airspeed threshold value. In response to a determination that the airspeed of the aircraft vehicle is not greater than or equal to the airspeed threshold value, the method may further include determining a subsequent angle for rotating the first rotor assembly and transmitting a subsequent instruction to rotate the first rotor assembly to the subsequent angle.

According to another embodiment, a non-transitory computer-readable medium storing instructions that when executed by a processor, may cause the processor to transmit an instruction to rotate a rotor assembly to an initial angle with respect to a vertical axis. The processor may be further configured to receive one or more measurements associated with an airspeed of an aircraft vehicle. The processor may be further configured to determine if the airspeed of the aircraft vehicle is greater than or equal to an airspeed threshold value. In response to a determination that the airspeed of the aircraft vehicle is not greater than or equal to the airspeed threshold value, the processor may be further configured to determine a subsequent angle for rotating the rotor assembly and to transmit a subsequent instruction to rotate the rotor assembly to the subsequent angle.

### BRIEF DESCRIPTION OF THE DRAWINGS

To assist in understanding the present disclosure, reference is now made to the following description taken in conjunction with the accompanying drawings, in which:
**FIG. 1A and 1B** illustrates an example vehicle, according to certain embodiments;
**FIGs. 2A - 2C** illustrate examples of operating the example vehicles in FIGs. 1A and 1B, according to certain embodiments;
**FIG. 3** illustrates an example controller, according to certain embodiments; and
**FIG. 4** illustrates an example operation for the example vehicles in FIGs. 1A and 1B, according to certain embodiments.

### DETAILED DESCRIPTION

Illustrative embodiments of the present disclosure are described in detail herein. **In** the interest of clarity, not all features of an actual implementation may be described in this specification. It will of course be appreciated that in the development of any such actual embodiment, numerous implementation specific decisions may be made to achieve the specific implementation goals, which may vary from one implementation to another. Moreover, it will be appreciated that such a development effort might be complex and time consuming but would nevertheless be a routine undertaking for those of ordinary skill in the art having the benefit of the present disclosure.

Throughout this disclosure, a reference numeral followed by an alphabetical character refers to a specific instance of an element and the reference numeral alone refers to the element generically or collectively. Thus, as an example (not shown in the drawings), widget "1a" refers to an instance of a widget class, which may be referred to collectively as widgets "1" and any one of which may be referred to generically as a widget "1". In the figures and the description, like numerals are intended to represent like elements.

The terms "couple" or "couples," as used herein, are intended to mean either an indirect or direct connection. Thus, if a first device couples to a second device, that connection may be through a direct connection, or through an indirect electrical connection or a shaft coupling via other devices and connections.

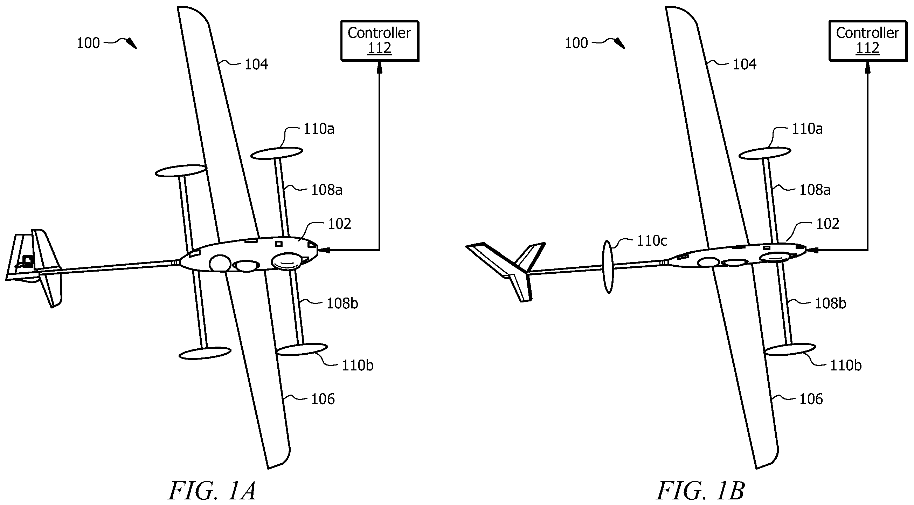

To facilitate a better understanding of the present disclosure, the following examples of certain embodiments are given. The following examples are not to be read to limit or define the scope of the disclosure. Embodiments of the present disclosure and its advantages are best understood by referring to FIGs. 1A through 4, where like numbers are used to indicate like and corresponding parts. Described herein are various systems and methods that provide dynamic adjustment of a tilt angle for the propulsion system of an unmanned aircraft.

FIGs. 1A and 1B illustrate an example vehicle 100. Vehicle 100 may be any suitable vessel configured for transportation, such as an aircraft. In embodiments, the vehicle 100 may be an unmanned aircraft powered by electricity and/or any other suitable power source. Vehicle 100 may include a body 102 (for example, a fuselage), a first wing 104, and a second wing 106. As illustrated, both the first wing 104 and the second wing 106 may be coupled to the body 102, wherein the first wing 104 may be disposed opposite to the second wing 106. The first wing 104 and the second wing 106 may extend laterally away from the body 102 and may be configured to generate lift for the vehicle 100. The vehicle 100 may be any suitable size, height, shape, and any combinations thereof. In embodiments, the body 102 may be cylindrical, and the first wing 104 and the second wing 106 may generally be rectangular. As shown, the vehicle 100 may further comprise an aircraft fairing 108.

The aircraft fairing 108 may be any suitable size, height, shape, and any combinations thereof. The aircraft fairing 108 may be a structural component operable to secure a rotor assembly 110 to the vehicle 100. As illustrated, the aircraft fairing 108 may extend outwards from the body 102 generally in the same direction as the first wing 104 or second wing 106. In embodiments, there may be a plurality of aircraft fairings 108 extending from the body 102, wherein each one individually couples an additional rotor assembly 110 to the body 102. For example, a first aircraft fairing 108a may extend outwards in one direction securing a first rotor assembly 110a to the body, and a second aircraft fairing 108b may extend in an opposite direction securing a second rotor assembly 110b to the body 102. The vehicle 100 is not limited to such a number and may include any suitable number of additional aircraft fairings 108 and rotor assemblies 110. In other embodiments, the rotor assembly 110 may be disposed directly on the body 102 or on a connecting structure disposed behind the body 102. For example, as best seen in FIG. 1B, a third rotor assembly 110c may be disposed along a connecting structure connecting the body 102 to a tail-wing. In these embodiments, the connecting structure may be considered as a portion of the body 102, and the third rotor assembly 110c may be disposed laterally offset from the first rotor assembly 110a, with respect to the body 102. The third rotor assembly 110c and/or second rotor assembly 110b may be disposed along a horizontal plane with respect to the first rotor assembly 110a.

In embodiments, the rotor assembly 110 may be disposed and/or secured at an end of the aircraft fairing 108. Without limitations, the rotor assembly 110 may be secured to the aircraft fairing 108 through any suitable means, including through the usage of fasteners, welding, adhesives, interlocking components, interference fit, and any combination thereof. In embodiments, suitable fasteners may include studs, bolts, nuts, washers, screws, nails, rivets, brackets, clamps, and the like. The rotor assembly 110 may be configured to provide lift, thrust, and a combination thereof for the vehicle 100

The rotor assembly 110 may be configured to receive power from a power source (i.e., one or more batteries) located within the body 102 in order to operate.

In embodiments, a controller 112 (discussed further below) may be configured to actuate the rotor assembly 110. The controller 112 may be communicatively coupled to the rotor assembly 110, such as through a wired or wireless connection. The controller 112 may transmit and receive signals, such as instructions to the rotor assembly 110 and/or measurements relative to operation of the rotor assembly 110 and vehicle 100.

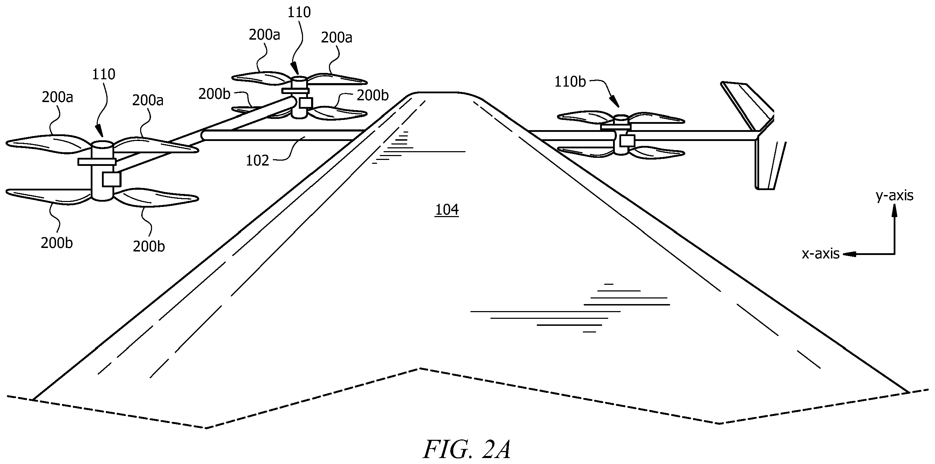

FIGs. 2A - 2C illustrate examples of operating the vehicle 100 (referring to FIGs. 1A and 1B). In embodiments, each of FIGs. 2A - 2C provide a view along at least one wing (i.e., the first wing 104) from a distal end towards the body 102 showing various positions of a rotor assembly 110. For example, FIG. 2A illustrates the vehicle 100 operating with the rotor assembly 110 in an initial position. Herein, the initial position of the rotor assembly 110 may be wherein one or more rotor blades 200 of the rotor assembly 110 extend horizontally and parallel to a ground surface (such as along an x-axis). As illustrated, the rotor assembly 110 may comprise a first set of rotor blades 200a and a second set of rotor blades 200b facing an opposite direction. For example, a normal vector extending from the rotor assembly 110 may be parallel to a vertical axis (such as a y-axis) and perpendicular to the ground surface.

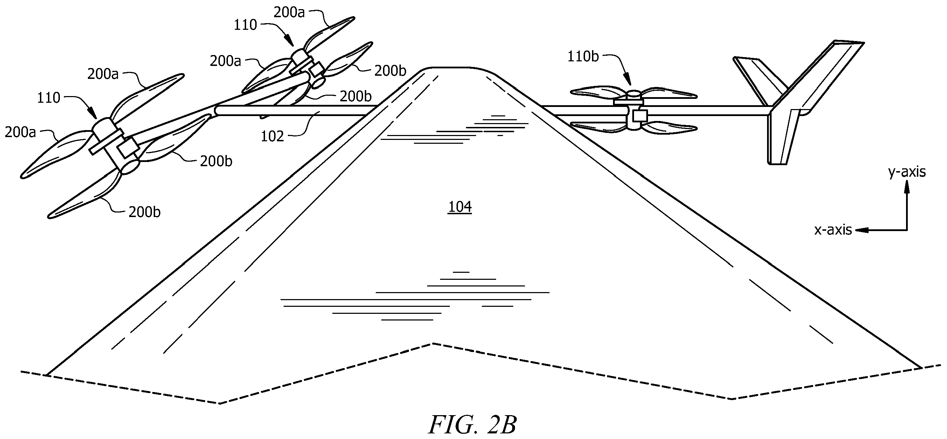

FIG. 2B illustrates an example wherein the rotor assembly 110 has been actuated to rotate to an initial angle with respect to a vertical axis (i.e., the y-axis). For example, once the vehicle 100 has reached a certain height, the controller 112 (referring to FIGs. 1A and 1B) may transmit an instruction to rotate the rotor assembly 110 to an initial angle. This may occur after the vehicle 100 is at a height greater than or equal to an altitude threshold. For example, the rotor assembly 110 may provide lift to the vehicle 100 to reach an altitude of a suitable height. If the altitude is greater than or equal to a threshold value, the vehicle 100 may operate to transition from applying solely lift to a combination of lift and thrust. This may occur by actuating the rotor assembly 110 to rotate to an angle with respect to the y-axis.

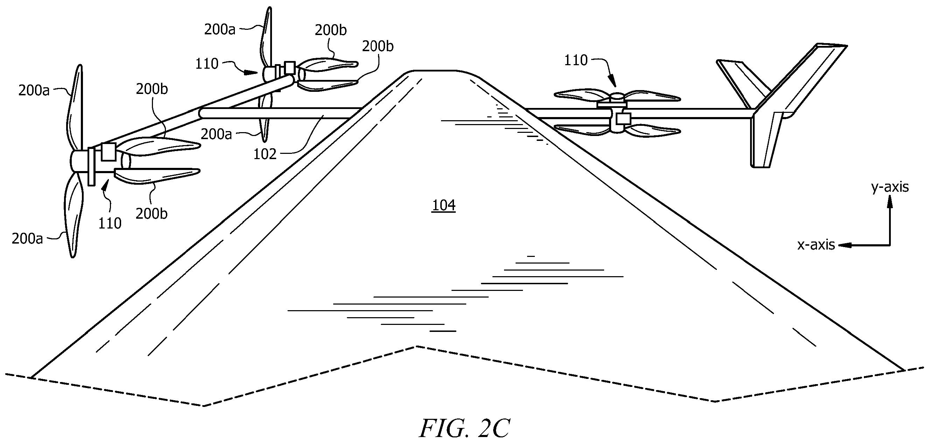

FIG. 2C illustrates an example wherein the rotor assembly 110 has been actuated to rotate to a final angle with respect to a vertical axis (i.e., the y-axis). In embodiments, the rotor assembly 110 may provide thrust to the vehicle 100 when transitioned to an angle with respect to the vertical axis. The controller 112 may be configured to iteratively instruct the rotor assembly 110 to rotate to one or more subsequent angles as the airspeed of the vehicle 100 increases. For example, there may be a sensor (not shown) disposed at a proximal end of the body 102 and configured to measure the airspeed of the vehicle 100. The controller 112 may receive one or more measurements associated with the airspeed of the vehicle 100 from the sensor. The controller 112 may determine whether the airspeed of the vehicle 100 is greater than or equal to a certain value and dynamically adjust the angle of the rotor assembly 110 to increase the airspeed until this condition occurs. Once the vehicle 100 achieves a certain airspeed, such as an airspeed threshold value, the controller 112 may instruct the rotor assembly 110 to rotate to the final angle, wherein the final angle may be 90°. Further, the controller 112 may transmit an instruction to stop actuating the second set of rotor blades 200b once the rotor assembly 110 is at the final angle. Without limitations, the aforementioned instruction may include actuating the second set of rotor blades 200b to fold inwards, thereby reducing potential drag caused by the second set of rotor blades 200b. In embodiments, the controller 112 may be configured to further operate a plurality of rotor assemblies 110 in addition to the illustrative example. Further, operations to each of the plurality of rotor assemblies 110 may occur concurrently and may consist of the same operations. In other examples, certain operational steps may not occur, such as instructing the second set of rotor blades 220b to fold inwards.

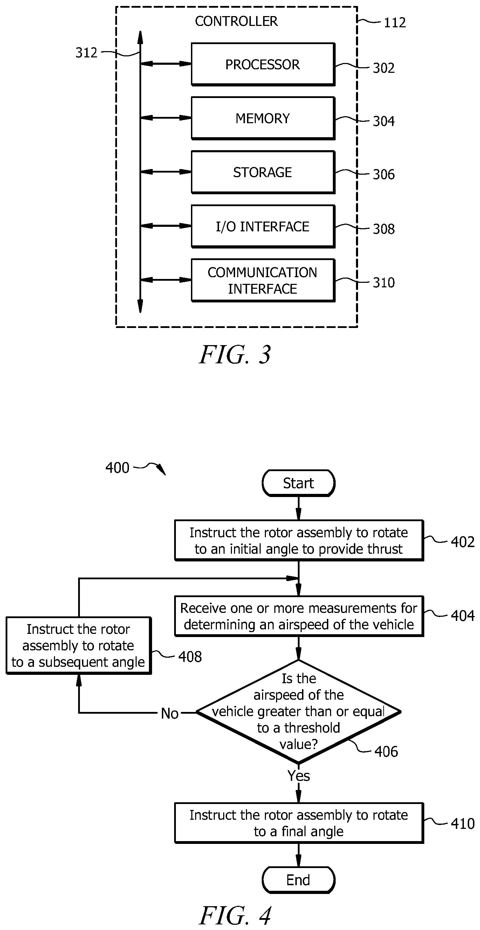

FIG. 3 illustrates the controller 112 of the vehicle 100 (referring to FIGs. 1A and 1B), in accordance with certain embodiments. In particular embodiments, one or more controllers 112 perform one or more steps of one or more methods described or illustrated herein. In particular embodiments, one or more controllers 112 provide functionality described or illustrated herein. In particular embodiments, software running on one or more controllers 112 performs one or more steps of one or more methods described or illustrated herein or provides functionality described or illustrated herein. Particular embodiments include one or more portions of one or more controllers 112. Herein, reference to a controller may encompass a computing device, and vice versa, where appropriate. Moreover, reference to a controller may encompass one or more controllers, where appropriate.

This disclosure contemplates any suitable number of controllers 112. This disclosure contemplates controller 112 taking any suitable physical form. As example and not by way of limitation, controller 112 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, controller 112 may include one or more controllers 112; be unitary or distributed; span multiple locations; span multiple machines; span multiple data centers; or reside in a cloud, which may include one or more cloud components in one or more networks. Where appropriate, one or more controllers 112 may perform without substantial spatial or temporal limitation one or more steps of one or more methods described or illustrated herein. As an example and not by way of limitation, one or more controllers 112 may perform in real time or in batch mode one or more steps of one or more methods described or illustrated herein. One or more controllers 112 may perform at different times or at different locations one or more steps of one or more methods described or illustrated herein, where appropriate.

In particular embodiments, controller 112 may include a processor 302, memory 304, storage 306, an input/output (I/O) interface 308, a communication interface 310, and a bus 312. Although this disclosure describes and illustrates a particular controller having a particular number of particular components in a particular arrangement, this disclosure contemplates any suitable controller having any suitable number of any suitable components in any suitable arrangement.

In particular embodiments, processor 302 includes hardware for executing instructions, such as those making up a computer program. As an example and not by way of limitation, to execute instructions, processor 302 may retrieve (or fetch) the instructions from an internal register, an internal cache, memory 304, or storage 306; decode and execute them; and then write one or more results to an internal register, an internal cache, memory 304, or storage 306. In particular embodiments, processor 302 may include one or more internal caches for data, instructions, or addresses. This disclosure contemplates processor 302 including any suitable number of any suitable internal caches, where appropriate. As an example and not by way of limitation, processor 302 may include one or more instruction caches, one or more data caches, and one or more translation lookaside buffers (TLBs). Instructions in the instruction caches may be copies of instructions in memory 304 or storage 306, and the instruction caches may speed up retrieval of those instructions by processor 302. Data in the data caches may be copies of data in memory 304 or storage 306 for instructions executing at processor 302 to operate on; the results of previous instructions executed at processor 302 for access by subsequent instructions executing at processor 302 or for writing to memory 304 or storage 306; or other suitable data. The data caches may speed up read or write operations by processor 302. The TLBs may speed up virtual-address translation for processor 302. In particular embodiments, processor 302 may include one or more internal registers for data, instructions, or addresses. This disclosure contemplates processor 302 including any suitable number of any suitable internal registers, where appropriate. Where appropriate, processor 302 may include one or more arithmetic logic units (ALUs); be a multi-core processor; or include one or more processors 302. Although this disclosure describes and illustrates a particular processor, this disclosure contemplates any suitable processor.

In particular embodiments, memory 304 includes main memory for storing instructions for processor 302 to execute or data for processor 302 to operate on. As an example and not by way of limitation, controller 112 may load instructions from storage 306 or another source (such as, for example, another controller 112) to memory 304. Processor 302 may then load the instructions from memory 304 to an internal register or internal cache. To execute the instructions, processor 302 may retrieve the instructions from the internal register or internal cache and decode them. During or after execution of the instructions, processor 302 may write one or more results (which may be intermediate or final results) to the internal register or internal cache. Processor 302 may then write one or more of those results to memory 304. In particular embodiments, processor 302 executes only instructions in one or more internal registers or internal caches or in memory 304 (as opposed to storage 306 or elsewhere) and operates only on data in one or more internal registers or internal caches or in memory 304 (as opposed to storage 306 or elsewhere). One or more memory buses (which may each include an address bus and a data bus) may couple processor 302 to memory 304. Bus 312 may include one or more memory buses, as described below. In particular embodiments, one or more memory management units (MMUs) reside between processor 302 and memory 304 and facilitate accesses to memory 304 requested by processor 302. In particular embodiments, memory 304 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 304 may include one or more memories 304, where appropriate. Although this disclosure describes and illustrates particular memory, this disclosure contemplates any suitable memory.

In particular embodiments, storage 306 includes mass storage for data or instructions. As an example and not by way of limitation, storage 306 may include a hard disk drive (HDD), a floppy disk drive, flash memory, an optical disc, a magneto-optical disc, magnetic tape, or a Universal Serial Bus (USB) drive or a combination of two or more of these. Storage 306 may include removable or non-removable (or fixed) media, where appropriate. Storage 306 may be internal or external to controller 112, where appropriate. In particular embodiments, storage 306 is non-volatile, solid-state memory. In particular embodiments, storage 306 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 306 taking any suitable physical form. Storage 306 may include one or more storage control units facilitating communication between processor 302 and storage 306, where appropriate. Where appropriate, storage 306 may include one or more storages 306. Although this disclosure describes and illustrates particular storage, this disclosure contemplates any suitable storage.

In particular embodiments, I/O interface 308 includes hardware, software, or both, providing one or more interfaces for communication between controller 112 and one or more I/O devices. Controller 112 may include one or more of these I/O devices, where appropriate. One or more of these I/O devices may enable communication between a person and controller 112. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 308 for them. Where appropriate, I/O interface 308 may include one or more device or software drivers enabling processor 302 to drive one or more of these I/O devices. I/O interface 308 may include one or more I/O interfaces 308, where appropriate. Although this disclosure describes and illustrates a particular I/O interface, this disclosure contemplates any suitable I/O interface.

In particular embodiments, communication interface 310 includes hardware, software, or both providing one or more interfaces for communication (such as, for example, packet-based communication) between controller 112 and one or more other controllers 112 or one or more networks. As an example and not by way of limitation, communication interface 310 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 310 for it. As an example and not by way of limitation, controller 112 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, controller 112 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network, a Long-Term Evolution (LTE) network, or a 5G network), or other suitable wireless network or a combination of two or more of these. Controller 112 may include any suitable communication interface 310 for any of these networks, where appropriate. Communication interface 310 may include one or more communication interfaces 310, where appropriate. Although this disclosure describes and illustrates a particular communication interface, this disclosure contemplates any suitable communication interface.

In particular embodiments, bus 312 includes hardware, software, or both coupling components of controller 112 to each other. As an example and not by way of limitation, bus 312 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 312 may include one or more buses 312, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

FIG. 4 is a flowchart of an embodiment of a process 400 for the vehicle 100 (referring to FIGs. 1A - 1B). The vehicle 100 may employ process 400 for dynamically tilting the rotor assembly 110 (referring to FIGs. 1A - 1B) to a final position at a final angle. At operation 402, processor 302 (referring to FIG. 3) of the controller 112 (referring to FIG. 3) may transmit an instruction to rotate the rotor assembly 110 to an initial angle with respect to a vertical axis (i.e., the y-axis). In embodiments, this transmission may occur after the vehicle 100 is at a height greater than or equal to an altitude threshold. For example, the vehicle 100 may initially be stationary and on a ground surface. The rotor assembly 110 may be actuated to apply lift to the vehicle 100, thereby allowing the vehicle to be displaced along the vertical axis to a certain altitude. In embodiments, once the altitude is equal to or exceeds an altitude threshold value, stored in the memory 304 (referring to FIG. 3), the processor 302 may transmit the instruction to rotate the rotor assembly 110, thereby providing thrust to the vehicle 100. In embodiments, the transmission may be received by a suitable tilt device operable to rotate the rotor assembly 110.

At operation 404, the processor 302 of the controller 112 may receive one or more measurements associated with the airspeed of the vehicle 100. For example, there may be a sensor disposed at a proximal location along the vehicle 100, such as at a front-end of the body 102 (referring to FIGs. 1A - 1B) or a leading edge of one of the first wing 104 (referring to FIGs. 1A - 1B) or second wing 106 (referring to FIGs. 1A - 1B). The sensor may be configured to measure a parameter related to operation of the vehicle 100. Without limitations, the sensor may be a pitot tube.

At operation 406, the processor 302 of the controller 112 may determine whether the airspeed of the vehicle 100 is greater than or equal to an airspeed threshold value. In embodiments, the memory 304 may be configured to store the airspeed threshold value. If the airspeed of the vehicle 100 is not greater than or equal to the airspeed threshold value, the process 400 may proceed to operation 408, otherwise the process 400 may proceed to operation 410.

At operation 408, the processor 302 of the controller 112 may determine a subsequent angle of which to rotate the rotor assembly 110. In embodiments, the processor 302 may determine the subsequent angle by calculating the tilt angle output, which is based on combining the starting tilt angle (i.e., the initial angle) with the product of a gain factor multiplied by the airspeed of the vehicle 100 raised to the second degree (or squared). Without limitations, the gain factor may comprise a value of about 2. The processor 302 may further transmit a subsequent instruction to rotate the rotor assembly 110 to said subsequent angle. In embodiments, this may increase the thrust provided by rotor assembly 110 and may increase the airspeed of the vehicle 100. The process 400 may proceed back to operation 404 to receive additional measurements for determining the airspeed of the vehicle 100. In embodiments, operations 404, 406, and 408 may collectively provide iterative and dynamic adjustments to the angle at which the rotor assembly 110 is disposed at relative to the vertical axis. This may provide improvements in operating the vehicle 100 by avoiding potential nose-drop and a drop in altitude by providing incremental changes as opposed to directly changing the rotor assembly 110 from an initial angle to a final angle.

At operation 410, the processor 302 of the controller 112 may transmit an instruction to rotate the rotor assembly 110 to a final angle. In embodiments, the final angle may be 90°. In embodiments, transition to the final angle may provide fixed wing flight wherein the first wing 104 and second wing 106 provide the lift necessary to operate the vehicle 100. In these embodiments, the rotor assembly 110 no longer contributes to the lift and may solely provide thrust. Depending on the rotor assembly 110 (i.e., first rotor assembly 110a, second rotor assembly 110b, or third rotor assembly 110c), the processor 302 may further transmit an instruction to stop actuating the second set of rotor blades 200b of said rotor assembly 110 once it is at the final angle. Further, there may be a transmission instructing that rotor assembly 110 to fold the second set of rotor blades 200b inward. The process 400 may then proceed to end.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic.

Modifications, additions, or omissions may be made to the methods described herein without departing from the scope of the disclosure. The methods may include more, fewer, or other steps. Additionally, steps may be performed in any suitable order. That is, the steps of any method disclosed herein do not have to be performed in the exact order disclosed, unless explicitly stated.

The present disclosure may provide numerous advantages, such as the various technical advantages that have been described with respective to various embodiments and examples disclosed herein. Other technical advantages will be readily apparent to one skilled in the art from the following figures, descriptions, and claims. Moreover, while specific advantages have been enumerated in this disclosure, various embodiments may include all, some, or none of the enumerated advantages.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. An aircraft vehicle, comprising:
a body;
at least one wing coupled to the body;
a first aircraft fairing extending from a first side of the body;
a first rotor assembly disposed at an end of the first aircraft fairing; and
a controller configured to actuate the first rotor assembly, comprising:
a memory configured to store an airspeed threshold value; and
a processor, operably coupled to the memory, configured to:
transmit an instruction to rotate the first rotor assembly to an initial angle with respect to a vertical axis;
receive one or more measurements associated with an airspeed of the aircraft vehicle;
determine if the airspeed of the aircraft vehicle is greater than or equal to the airspeed threshold value; and
in response to a determination that the airspeed of the aircraft vehicle is not greater than or equal to the airspeed threshold value:
determine a subsequent angle for rotating the first rotor assembly; and
transmit a subsequent instruction to rotate the first rotor assembly to the subsequent angle.

2. A method for actuating a rotor assembly, comprising:
transmitting an instruction to rotate the rotor assembly to an initial angle with respect to a vertical axis, wherein the rotor assembly is disposed at an end of an aircraft fairing extending from a body of an aircraft vehicle;
receiving one or more measurements associated with an airspeed of the aircraft vehicle;
determining if the airspeed of the aircraft vehicle is greater than or equal to an airspeed threshold value; and
in response to a determination that the airspeed of the aircraft vehicle is not greater than or equal to the airspeed threshold value:
determining a subsequent angle for rotating the rotor assembly; and
transmitting a subsequent instruction to rotate the rotor assembly to the subsequent angle.

3. A non-transitory computer-readable medium storing instructions that when executed by a processor, cause the processor to:
transmit an instruction to rotate a rotor assembly to an initial angle with respect to a vertical axis, wherein the rotor assembly is disposed at an end of an aircraft fairing extending from a body of an aircraft vehicle;
receive one or more measurements associated with an airspeed of the aircraft vehicle;
determine if the airspeed of the aircraft vehicle is greater than or equal to an airspeed threshold value; and
in response to a determination that the airspeed of the aircraft vehicle is not greater than or equal to the airspeed threshold value:
determine a subsequent angle for rotating the rotor assembly; and
transmit a subsequent instruction to rotate the rotor assembly to the subsequent angle.

4. The aircraft vehicle of claim 1, further comprising a sensor disposed at a proximal end of the body and configured to measure the airspeed of the aircraft vehicle; or
the method of claim 2, wherein the aircraft vehicle comprises a sensor disposed at a proximal end of the body and configured to measure the airspeed of the aircraft vehicle.

5. The aircraft vehicle of claim 1 or the aircraft vehicle of claim 4, wherein the processor is further configured to instruct the first rotor assembly to actuate in order to apply lift to the aircraft vehicle; or
the method of claim 2 or of claim 4, further comprising instructing the rotor assembly to actuate in order to apply lift to the aircraft vehicle.

6. The aircraft vehicle of claim 1 or of claim 4 or of claim 5, wherein the memory is further configured store an altitude threshold, wherein the processor is configured to transmit the instruction to rotate the first rotor assembly to the initial angle after the aircraft vehicle is at a height greater than or equal to the altitude threshold; or
the method of claim 2 or of claim 4 or of claim 5, wherein transmitting the instruction to rotate the rotor assembly to the initial angle occurs after the aircraft vehicle is at a height greater than or equal to an altitude threshold.

7. The aircraft vehicle of claim 1 or of any one of claims 4 to 6, wherein the processor is further configured to:
transmit an instruction to rotate the first rotor assembly to a final angle when the airspeed of the aircraft vehicle is greater than or equal to the airspeed threshold value, wherein the final angle is 90°; or
the method of claim 2 or of any one of claims 4 to 6, further comprising transmitting an instruction to rotate the rotor assembly to a final angle when the airspeed of the aircraft vehicle is greater than or equal to the airspeed threshold value, wherein the final angle is 90°.

8. The aircraft vehicle of claim 7, wherein the first rotor assembly comprises a first set of rotor blades and a second set of rotor blades, wherein the processor is further configured to transmit an instruction to stop actuating the second set of rotor blades once the first rotor assembly is at the final angle; or
the method of claim 2 or of any of claims 4 to 7, wherein the rotor assembly comprises a first set of rotor blades and a second set of rotor blades, the method further comprising transmitting an instruction to stop actuating the second set of rotor blades once the rotor assembly is at the final angle.

9. The aircraft vehicle of claim 1 or of any of claims 4 to 8, further comprising a second rotor assembly disposed along a horizontal plane with respect to the first rotor assembly.

10. The aircraft vehicle of claim 9, wherein the second rotor assembly is disposed at an end of a second aircraft fairing, and wherein the second aircraft fairing extends from the body at an opposite side from the first aircraft fairing.

11. The aircraft vehicle of claim 10, wherein the controller is further configured to:
transmit an instruction to rotate the second rotor assembly to the initial angle concurrently with the first rotor assembly; and
transmit the subsequent instruction to rotate the second rotor assembly to the subsequent angle concurrently with the first rotor assembly.

12. The aircraft vehicle of any one of claims 9 to 12, wherein the second rotor assembly is disposed along the body and laterally offset from the first rotor assembly with respect to the body.

13. The non-transitory computer-readable medium of claim 3, wherein the instructions further cause the processor to:
transmit an instruction to rotate the rotor assembly to a final angle when the airspeed of the aircraft vehicle is greater than or equal to the airspeed threshold value, wherein the final angle is 90°.

14. The non-transitory computer-readable medium of claim 3 or of claim 13, wherein the instructions further cause the processor to:
instruct the rotor assembly to actuate in order to apply lift to the aircraft vehicle.

15. The non-transitory computer-readable medium of claim 3 or of claim 13 or of claim 14, wherein the instructions further cause the processor to:
transmit the instruction to rotate the rotor assembly to the initial angle after the aircraft vehicle is at a height greater than or equal to an altitude threshold.
